# EUROPEAN PATENT SPECIFICATION

(11) **EP 3 605 879 B1**
(45) Date of publication and mention of the grant of the patent: **23.06.2021**
(21) Application number: 17906934.9
(22) Date of filing: 28.04.2017
(51) Int. Cl.: H04B 10/2507, H04J 14/00, H04B 10/2581, H04J 14/02, H04J 14/04

(54) **OPTICAL TRANSMISSION SYSTEM**
SYSTEM ZUR OPTISCHEN ÜBERTRAGUNG
SYSTÈME DE TRANSMISSION OPTIQUE

(43) Date of publication of application: 05.02.2020
(73) Proprietor: Mitsubishi Electric Corporation, Chiyoda-ku Tokyo 100-8310 (JP)
(72) Inventor: GOTO, Hiroki, Tokyo 100-8310 (JP)
(74) Representative: Plasseraud IP
(86) International application number: PCT/JP2017/016960
(87) International publication number: WO 2018/198326

(56) References cited:
- WO-A1-2013/179604
- JP-A- 2012 222 613
- JP-A- 2016 139 938
- SANO AKIHIDE ET AL: "Crosstalk-Managed High Capacity Long Haul Multicore Fiber Transmission With Propagation-Direction Interleaving", JOURNAL OF LIGHTWAVE TECHNOLOGY, IEEE, USA, vol. 32, no. 16, 15 August 2014 (2014-08-15), pages 2771-2779, XP011554198, ISSN: 0733-8724, DOI: 10.1109/JLT.2014.2320826 [retrieved on 2014-07-22]
- ITO T ET AL: "Reduction of influence of inter-core cross-talk in MCF with bidirectional assignment between neighboring cores", OPTICAL FIBER COMMUNICATION CONFERENCE AND EXPOSITION AND THE NATIONAL FIBER OPTIC ENGINEERS CONFERENCE (OFC/NFOEC), 2013, IEEE, 17 March 2013 (2013-03-17), pages 1-3, XP032427096, DOI: 10.1364/OFC.2013.OTH3K.2 ISBN: 978-1-4799-0457-0
- TODE HIDEKI ET AL: "Routing, Spectrum, and core and/or mode assignment on space-division multiplexing optical networks [invited]", JOURNAL OF OPTICAL COMMUNICATIONS AND NETWORKING, INSTITUTE OF ELECTRICAL AND ELECTRONICS ENGINEERS, US, vol. 9, no. 1, 1 January 2017 (2017-01-01) , XP011639714, ISSN: 1943-0620, DOI: 10.1364/JOCN.9.000A99 [retrieved on 2017-01-23]
- PERELLO JORDI ET AL: "Assessment of Flex-grid/SDM backbone networks under inter-core XT-limited transmission reach", 2015 INTERNATIONAL CONFERENCE ON PHOTONICS IN SWITCHING (PS), IEEE, 22 September 2015 (2015-09-22), pages 190-192, XP032799055, DOI: 10.1109/PS.2015.7328996 [retrieved on 2015-11-13]

## Description

### Field

The present invention relates to an optical transmission system used for large capacity optical communication.

### Background

As communication traffic increases, trunk transmission systems are anticipated to run out of transmission capacity in the near future. In related art, wavelength multiplexing is performed at high density so that the number of channels is increased and thus the transmission capacity is increased, or the transmission speed is increased and modulated signals are multivalued so that the transmission capacity per channel is increased.

Spatial multiplexing of optical signals using multicore optical fibers have received attention as a method for further increasing the transmission capacity. A plurality of cores are arranged in one multicore optical fiber, and multiplexing is performed by applying optical signals of different types to the respective cores, which enables transmission capacity to be increased in units of cores. With the spatial multiplexing method using multicore optical fibers, the transmission capacity increases as the number of cores increases, but the cores need to be arranged close to each other, which has a problem in that optical signals are degraded due to crosstalk occurring between adjacent cores.

Patent Literature 1 teaches a method of suppressing the influence of crosstalk occurring between adjacent cores by inputting signal lights having different wavelengths from each other to respective cores that are closest to each other among a plurality of cores arranged in a multicore optical fiber.

Patent Literature 2 teaches a method of suppressing the influence of crosstalk occurring between adjacent cores by transmitting optical signals in opposite directions in cores that are closest to each other among a plurality of cores arranged in a multicore optical fiber.

### Citation List

### Patent Literature

Patent Literature 1: International Publication No. WO 2012/137789
Patent Literature 2: International Publication No. WO 2013/157245

### Non-Patent Literature

Non-Patent Literature 1: SANO AKIHIDE ET AL, "Crosstalk-Managed High Capacity Long Haul Multicore Fiber Transmission With Propagation-Direction Interleaving", JOURNAL OF LIGHTWAVE TECHNOLOGY, IEEE, vol. 32, no. 16, pages 2771 - 2779.
Non-Patent Literature 2: ITO T ET AL, "Reduction of influence of inter-core cross-talk in MCF with bidirectional assignment between neighboring cores", OPTICAL FIBER COMMUNICATION CONFERENCE AND EXPOSITION AND THE NATIONAL FIBER OPTIC ENGINEERS CONFERENCE (OFC/NFOEC), 2013, IEEE, pages 1 - 3.
Non-Patent Literature 3: TODE HIDEKI ET AL, "Routing, Spectrum, and core and/or mode assignment on space-division multiplexing optical networks [invited]", JOURNAL OF OPTICAL COMMUNICATIONS AND NETWORKING, INSTITUTE OF ELECTRICAL AND ELECTRONICS ENGINEERS, vol. 9, no. 1.

### Summary

### Technical Problem

The method taught in Patent Literature 1, however, has a problem in that an available band in which no signal lights are applied needs to be provided among signal bands being used, which reduces the maximum capacity of a system. In addition, the method taught in Patent Literature 2 has a problem in that a plurality of optical amplifiers and signal multiplexers and demultiplexers are required at relays of optical transmission paths, which increases the components of an optical transmission system, increasing the cost of the entire system and power consumption of the entire optical transmission system.

The present invention has been made in view of the above, and an object thereof is to provide an optical transmission system that suppresses degradation of signals due to inter-core crosstalk in multicore optical fiber transmission and to enable effective use of available bands.

### Solution to Problem

To solve the above problems and achieve the object of the present subject disclosure, according to an aspect, an optical transmission system is proposed as set forth in the appended claims.

### Advantageous Effects of Invention

An optical transmission system according to the present invention produces effects of suppressing degradation of signals due to inter-core crosstalk in multicore optical fiber transmission and enabling effective use of available bands.

### Brief Description of Drawings

FIG. 1 is a configuration diagram of an optical transmission system according to a first embodiment of the present invention.
FIG. 2 is a table illustrating the relation between modulated signals transmitted to a plurality of cores in a multicore optical fiber included in the optical transmission system according to the first embodiment, and the frequencies allocated to the modulated signals.
FIG. 3 is a configuration diagram of an optical transmission system according to a second embodiment of the present invention.
FIG. 4 is a graph illustrating an example of a spectrum of signal lights transmitted to a plurality of cores in a multicore optical fiber included in the optical transmission system according to the second embodiment.

### Description of Embodiments

An optical transmission system according to embodiments of the present invention will be described in detail below with reference to the drawings. Note that the present invention is not limited to the embodiments.

### First Embodiment.

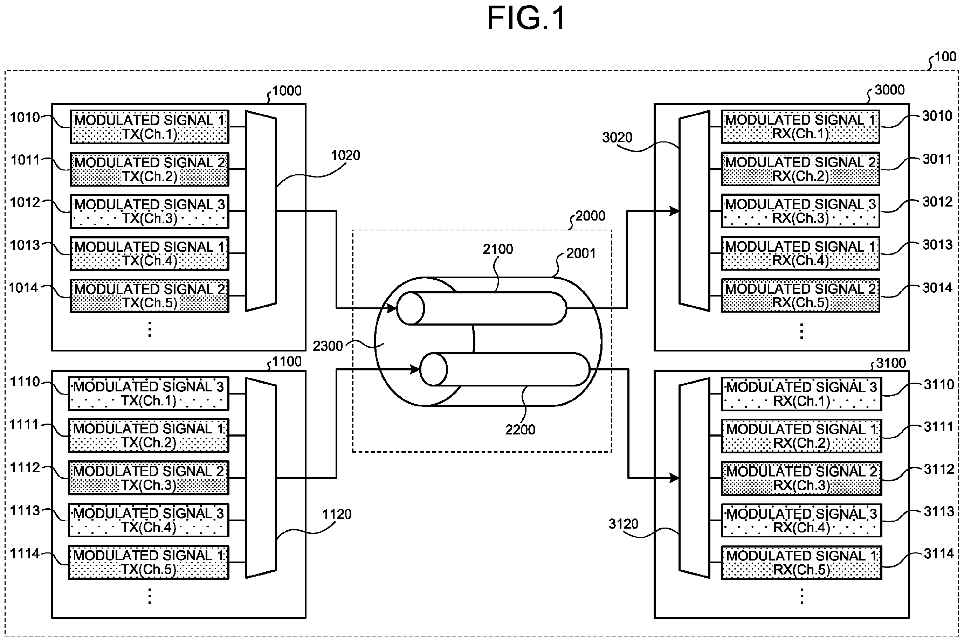

FIG. 1 is a configuration diagram of an optical transmission system according to a first embodiment of the present invention. As illustrated in FIG. 1, an optical transmission system 100 according to the first embodiment includes: an optical transmission unit 2000, which includes a multicore optical fiber 2001, an optical relay, which is not illustrated, and the like; a plurality of optical transmission devices 1000 and 1100; and a plurality of optical reception devices 3000 and 3100.

The multicore optical fiber 2001 includes a first core 2100, a second core 2200, and cladding 2300 formed on an outer periphery of the first core 2100 and the second core 2200. The first core 2100, the second core 2200, and the cladding 2300 are made of silica-based glass, and the cladding 2300 has a refractive index lower than those of the first core 2100 and the second core 2200. The multicore optical fiber 2001 is a so-called solid type multicore optical fiber having a solid structure in which no pore structure is present among the first core 2100, the second core 2200, and the cladding 2300.

The optical transmission device 1000 includes: a plurality of first optical transmitters 1010 and 1013 that generate a first modulated signal 1; a plurality of second optical transmitters 1011 and 1014 that generate a second modulated signal 2; a third optical transmitter 1012 that generates a third modulated signal 3; and an optical multiplexer 1020 that multiplexes signal lights generated by the optical transmitters and outputs a resulting signal light. Note that the number of optical transmitters included in the optical transmission device 1000 is not limited to five, and may be any number not smaller than two. Hereinafter, "the first optical transmitters 1010 and 1013, the second optical transmitters 1011 and 1014, and the third optical transmitter 1012" may simply be referred to as "a plurality of optical transmitters 1010 to 1014". In the figure, "TX" refers to a transmitter.

A number "Ch1" representing a first channel is allocated to the first modulated signal 1 generated by the first optical transmitter 1010. A number "Ch2" representing a second channel is allocated to the second modulated signal 2 generated by the second optical transmitter 1011. A number "Ch3" representing a third channel is allocated to the third modulated signal 3 generated by the third optical transmitter 1012. A number "Ch4" representing a fourth channel is allocated to the first modulated signal 1 generated by the first optical transmitter 1013. A number "Ch5" representing a fifth channel is allocated to the second modulated signal 2 generated by the second optical transmitter 1014.

The optical multiplexer 1020 wavelength-multiplexes signal lights having different wavelengths output from each of a plurality of optical transmitters 1010 to 1014 and outputs a resulting signal light to the first core 2100.

The optical transmission device 1100 includes: a plurality of first optical transmitters 1111 and 1114 that generate a first modulated signal 1; a second optical transmitter 1112 that generates a second modulated signal 2; a plurality of third optical transmitters 1110 and 1113 that generate a third modulated signal 3; and an optical multiplexer 1120 that multiplexes signal lights generated by the optical transmitters and outputs a resulting signal light. Note that the number of optical transmitters included in the optical transmission device 1100 is not limited to five, and may be any number not smaller than two. Hereinafter, "the first optical transmitters 1111 and 1114, the second optical transmitter 1112, and the third optical transmitters 1110 and 1113" may simply be referred to as "a plurality of optical transmitter 1110 to 1114".

The number "Ch1" representing the first channel is allocated to the third modulated signal 3 generated by the third optical transmitter 1110. The number "Ch2" representing the second channel is allocated to the first modulated signal 1 generated by the first optical transmitter 1111. The number "Ch3" representing the third channel is allocated to the second modulated signal 2 generated by the second optical transmitter 1112. The number "Ch4" representing the fourth channel is allocated to the third modulated signal 3 generated by the third optical transmitter 1113. The number "Ch5" representing the fifth channel is allocated to the first modulated signal 1 generated by the first optical transmitter 1114.

The optical multiplexer 1120 wavelength-multiplexes signal lights having different wavelengths output from each of a plurality of optical transmitters 1110 to 1114, and outputs a resulting signal light to the second core 2200.

The optical reception device 3000 includes: an optical demultiplexer 3020 that demultiplexes a signal light resulting from multiplexing at the optical multiplexer 1020; a plurality of first optical receivers 3010 and 3013 each of which demodulates a first modulated signal 1 from a signal light resulting from demultiplexing; a plurality of second optical receivers 3011 and 3014 each of which demodulates a second modulated signal 2 from a signal light resulting from demultiplexing; and a third optical receiver 3012 that demodulates a third modulated signal 3 from a signal light resulting from demultiplexing. Note that the number of optical receivers included in the optical reception device 3000 may be any number equal to the number of optical transmitters included in the optical transmission device 1000. In the figure, "RX" refers to a receiver.

The optical reception device 3100 includes: an optical demultiplexer 3120 that demultiplexes a signal light resulting from multiplexing at the optical multiplexer 1120; a plurality of first optical receivers 3111 and 3114 each of which demodulates a first modulated signal 1 from a signal light resulting from demultiplexing; a second optical receivers 3112 that demodulates a second modulated signal 2 from a signal light resulting from demultiplexing; and a plurality of third optical receivers 3110 and 3113 each of which demodulates a third modulated signal 3 from a signal light resulting from demultiplexing. Note that the number of optical receivers included in the optical reception device 3100 may be any number equal to the number of optical transmitters included in the optical transmission device 1100.

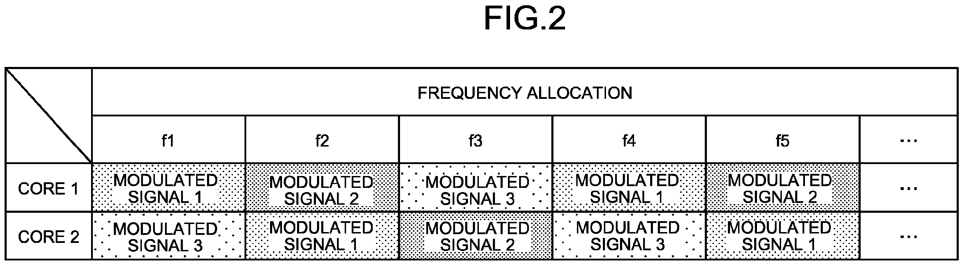

Next, operation of the optical transmission system 100 according to the first embodiment will be described. FIG. 2 is a table illustrating the relation between modulated signals transmitted to a plurality of cores in the multicore optical fiber included in the optical transmission system according to the first embodiment, and the frequencies allocated to the modulated signals. Frequencies "f1", "f2", "f3", "f4", and "f5" allocated to the modulated signals have different values from each other. The values of the frequencies increase in the order of "f1", "f2", "f3", "f4", and "f5".

"Core 1" refers to the first core 2100 illustrated in FIG. 1. "Core 2" refers to the second core 2200 illustrated in FIG. 1.

A "modulated signal 1" of "f1" transmitted to the "core 1" refers to the first modulated signal 1 generated by the first optical transmitter 1010 illustrated in FIG. 1. A "modulated signal 2" of "f2" transmitted to the "core 1" refers to the second modulated signal 2 generated by the second optical transmitter 1011 illustrated in FIG. 1. A "modulated signal 3" of "f3" transmitted to the "core 1" refers to the third modulated signal 3 generated by the third optical transmitter 1012 illustrated in FIG. 1. A "modulated signal 1" of "f4" transmitted to the "core 1" refers to the first modulated signal 1 generated by the first optical transmitter 1013 illustrated in FIG. 1. A "modulated signal 2" of "f5" transmitted to the "core 1" refers to the second modulated signal 2 generated by the second optical transmitter 1014 illustrated in FIG. 1.

A "modulated signal 3" of "f1" transmitted to the "core 2" refers to the third modulated signal 3 generated by the third optical transmitter 1110 illustrated in FIG. 1. A "modulated signal 1" of "f2" transmitted to the "core 2" refers to the first modulated signal 1 generated by the first optical transmitter 1111 illustrated in FIG. 1. A "modulated signal 2" of "f3" transmitted to the "core 2" refers to the second modulated signal 2 generated by the second optical transmitter 1112 illustrated in FIG. 1. A "modulated signal 3" of "f4" transmitted to the "core 2" refers to the third modulated signal 3 generated by the third optical transmitter 1113 illustrated in FIG. 1. A "modulated signal 1" of "f5" transmitted to the "core 2" refers to the first modulated signal 1 generated by the first optical transmitter 1114 illustrated in FIG. 1.

Note that, in the optical transmission system 100, when the multivalue level is doubled under a condition that the baud rate is constant, the optical signal to noise ratio (OSNR) necessary for obtaining the same signal characteristics is more than doubled, that is, equal to or higher than 3 dB. Thus, the light intensity at which the modulated signals are output, that is, the optical power needs to be doubled.

Typically, the OSNR necessary for satisfying necessary performance is different depending on differences in the type of signal to be modulated, the multivalue level of modulation, the baud rate, and the like. As the transmission capacity is higher, the required OSNR is higher, and thus the necessary optical power also increases. Thus, as the transmission capacity is higher, the influence thereof on a non-linear optical effect is greater, and the transmission characteristics are degraded, which makes long-distance transmission difficult. The non-linear optical effect refers to a change in phase (a change in refractive index) depending on the light intensity occurring when intense light is incident on a non-linear optical medium.

In the multicore optical fiber 2001, performances of the respective cores are considered to vary. The variations include manufacturing variations of the multicore optical fiber 2001, variations in inter-core gain and noise figure (NF) of optical amplifiers used for batch modulation, variations in loss in the optical multiplexers 1020 and 1120 and variations in loss in the optical demultiplexers 3020 and 3120, and the like.

In addition, in the multicore optical fiber 2001, crosstalk occurring between cores is also a cause of limitation of the transmission characteristics in addition to the various variations mentioned above. For example, a signal light propagating through the multicore optical fiber 2001 is subjected to strong interference from a signal light propagating through the second core 2200. The interference is dependent on the optical power of the signal light propagating through the second core 2200 and the inter-core crosstalk characteristic of the multicore optical fiber 2001.

In the optical transmission system 100 according to the present embodiment, signals with high transmission capacity per channel but low transmission characteristics and signals with a low transmission capacity but excellent transmission characteristics are mixed. In other words, in order to suppress the influence of crosstalk occurring between adjacent cores, the optical transmission system 100 adjusts necessary optical power by changing the types of signal lights on the same wavelength in adjacent cores.

Specifically, as illustrated in FIG. 2, because the "modulated signal 1" with the frequency "f1" and the "modulated signal 3" with the frequency "f1" are signals of different types, these signals are generated at different optical powers from each other. In FIG. 2, the optical power of the "modulated signal 1" with the frequency "f1" has a value higher than that of the optical power of the "modulated signal 3" with the frequency "f1".

The "modulated signal 2" with the frequency "f2" and the "modulated signal 1" with the frequency "f2" are signals of different types, and further generated at different optical powers from each other. In FIG. 2, the optical power of the "modulated signal 2" with the frequency "f2" has a value higher than that of the optical power of the "modulated signal 1" with the frequency "f2".

The "modulated signal 3" with the frequency "f3" and the "modulated signal 2" with the frequency "f3" are signals of different types, and further generated at different optical powers from each other. In FIG. 2, the optical power of the "modulated signal 3" with the frequency "f3" has a value higher than that of the optical power of the "modulated signal 2" with the frequency "f3".

The "modulated signal 1" with the frequency "f4" and the "modulated signal 3" with the frequency "f4" are signals of different types, and further generated at different optical powers from each other. In FIG. 2, the optical power of the "modulated signal 1" with the frequency "f4" has a value higher than that of the "modulated signal 3" with the frequency "f4".

The "modulated signal 2" with the frequency "f5" and the "modulated signal 1" with the frequency "f5" are signals of different types, and further generated at different optical powers from each other. In FIG. 2, the optical power of the "modulated signal 2" with the frequency "f5" has a value higher than that of the "modulated signal 1" with the frequency "f5".

The modulated signals transmitted to the "core 1" are such that the optical power of the "modulated signals 2" with the frequencies "f2" and "f5" has a value higher than that of the "modulated signals 1" with the frequencies "f1" and "f4", and that the optical power of the "modulated signals 1" with the frequencies "f1" and "f4" has a value higher than that of the "modulated signal 3" with the frequency "f3". The modulated signals transmitted to the "core 2" are such that the optical power of the "modulated signal 2" with the frequency "f3" has a value higher than that of the "modulated signals 1" with the frequencies "f2" and "f5", and that the optical power of the "modulated signals 1" with the frequencies "f2" and "f5" has a value higher than that of the "modulated signals 3" with the frequencies "f1" and "f4".

Note that, in the present embodiment, it is sufficient that modulated signals of different types with the same wavelength are output at different optical powers from each other to two adjacent cores, and the relation of the magnitudes of the intensities of the respective modulated signals transmitted to the "core 1" and the "core 2" is not limited to that illustrated.

As described above, in the optical transmission system 100 according to the first embodiment, modulated signals of different types with the same wavelength are output at different optical powers from each other to two adjacent cores. This configuration enables effective use of frequency band and achieves good signal characteristics.

### Second Embodiment.

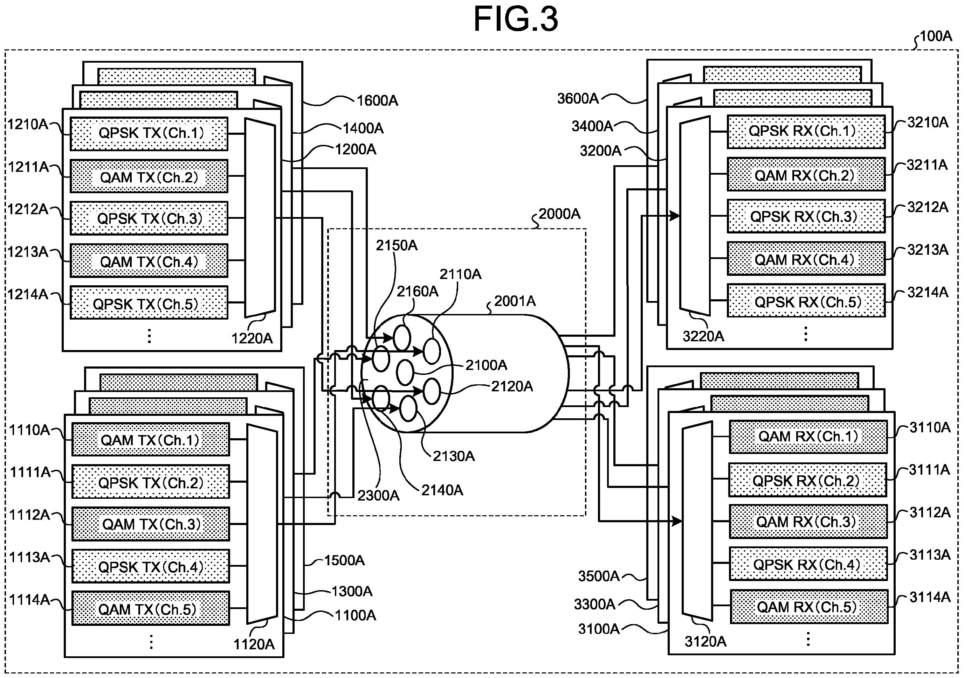

FIG. 3 is a configuration diagram of an optical transmission system according to a second embodiment of the present invention. As illustrated in FIG. 3, an optical transmission system 100A according to the second embodiment includes: an optical transmission unit 2000A, which includes a multicore optical fiber 2001A, an optical relay, which is not illustrated, and the like; a plurality of optical transmission devices 1100A, 1200A, 1300A, 1400A, 1500A, and 1600A; and a plurality of optical reception devices 3100A, 3200A, 3300A, 3400A, 3500A, and 3600A.

The multicore optical fiber 2001A includes: a first core 2110A; a second core 2120A; a third core 2130A; a fourth core 2140A; fifth core 2150A; a sixth core 2160A; a seventh core 2100A; and cladding 2300A formed around outer peripheries of the first to seventh cores. The first to seventh cores are made of silica-based glass, and the cladding 2300A has a refractive index lower than those of the first to seventh cores. The multicore optical fiber 2001A is a so-called solid type multicore optical fiber having a solid structure in which no pore structure is present among each of the first to seventh cores and the cladding 2300A. The first to sixth cores are arranged with a space between each other in the order of the first to sixth cores in the circumferential direction. The seventh core 2100A are provided at the center of the first to sixth cores that are annually arranged. While the number of cores of the multicore optical fiber 2001A is assumed to be seven, the number of cores is not limited to seven and may be any number not smaller than two. In addition, while no signal light is propagated through the seventh core 2100A provided at the center of the multicore optical fiber 2001A, some signal light may be transmitted through the seventh core 2100A.

The optical transmission device 1200A includes a plurality of optical transmitters 1210A, 1212A, and 1214A that generate quadrature phase shift keying (QPSK) signals allocated to odd-numbered channels (Chs), a plurality of optical transmitters 1211A and 1213A that generate quadrature amplitude modulation (QAM) signals allocated to even-numbered channels (Chs), and an optical multiplexer 1220A that multiplexes signal lights generated by the optical transmitters and outputs a resulting signal light. Note that the number of optical transmitters included in the optical transmission device 1200A is not limited to five, and may be any number not smaller than two. The optical transmission devices 1400A and 1600A have configurations similar to that of the optical transmission device 1200A. In the figure, "TX" refers to a transmitter.

A number "Ch1" representing a first channel is allocated to a QPSK signal that is the first modulated signal generated by the optical transmitter 1210A. A number "Ch2" representing a second channel is allocated to a QAM signal that is the second modulated signal 2 generated by the optical transmitter 1211A. A number "Ch3" representing a third channel is allocated to a QPSK signal that is the first modulated signal generated by the optical transmitter 1212A. A number "Ch4" representing a fourth channel is allocated to a QAM signal that is the second modulated signal 2 generated by the optical transmitter 1213A. A number "Ch5" representing a fifth channel is allocated to a QPSK signal that is the first modulated signal generated by the optical transmitter 1214A. The optical multiplexer 1220A of the optical transmission device 1200A wavelength-multiplexes signal lights having different wavelengths output from each of a plurality of optical transmitters, and outputs a resulting signal light to the second core 2120A.

The optical transmission device 1400A outputs a signal light resulting from multiplexing to the fourth core 2140A. The optical transmission device 1600A outputs a signal light resulting from multiplexing to the sixth core 2160A.

The optical transmission device 1100A includes: a plurality of optical transmitters 1111A and 1113A that generate QPSK signals allocated to even-numbered channels (Chs); a plurality of optical transmitters 1110A, 1112A, and 1114A that generate QAM signals allocated to odd-numbered channels (Chs); and an optical multiplexer 1120A that multiplexes signal lights generated by the optical transmitters and outputs a resulting signal light. Note that the number of optical transmitters included in the optical transmission device 1100A is not limited to five, and may be any number not smaller than two.

A number "Ch1" representing a first channel is allocated to a QAM signal that is the second modulated signal 2 generated by the optical transmitter 1110A. A number "Ch2" representing a second channel is allocated to a QPSK signal that is the first modulated signal generated by the optical transmitter 1111A. A number "Ch3" representing a third channel is allocated to a QAM signal that is the second modulated signal 2 generated by the optical transmitter 1112A. A number "Ch4" representing a fourth channel is allocated to a QPSK signal that is the first modulated signal generated by the optical transmitter 1113A. A number "Ch5" representing a fifth channel is allocated to a QAM signal that is the second modulated signal generated by the optical transmitter 1114A. The optical multiplexer 1120A of the optical transmission device 1100A wavelength-multiplexes signal lights having different wavelengths output from each of a plurality of optical transmitters, and outputs a resulting signal light to the first core 2110A.

The optical transmission device 1300A and the optical transmission device 1500A have configurations similar to that of the optical transmission device 1100A. The optical transmission device 1300A outputs a signal resulting from multiplexing to the third core 2130A. The optical transmission device 1500A outputs a signal light resulting from multiplexing to the fifth core 2150A.

The optical reception device 3200A includes: an optical demultiplexer 3220A that demultiplexes a signal light resulting from multiplexing at the optical multiplexer 1220A of the optical transmission device 1200A; an optical receiver 3210A that demodulates a QPSK signal on the first channel "Ch1" from a signal light resulting from demultiplexing; an optical receiver 3211A that demodulates a QAM signal on the second channel "Ch2" from a signal light resulting from demultiplexing; an optical receiver 3212A that demodulates a QPSK signal on the third channel "Ch3" from a signal light resulting from demultiplexing; an optical receiver 3213A that demodulates a QAM signal on the fourth channel "Ch4" from a signal light resulting from demultiplexing; and an optical receiver 3214A that demodulates a QPSK signal on the fifth channel "Ch5" from a signal light resulting from demultiplexing. Note that the number of optical receivers included in the optical reception device 3200A may be any number equal to the number of optical transmitters included in the optical transmission device 1200A. In the figure, "RX" refers to a receiver.

The optical reception device 3400A and the optical reception device 3600A have configurations similar to that of the optical reception device 3200A. The optical reception device 3400A includes: an optical demultiplexer that demultiplexes a signal light resulting from multiplexing at the optical transmission device 1400A; and a plurality of optical receivers that demodulate QPSK signals and QAM signals on the first to fifth channels from signal lights resulting from multiplexing. The optical reception device 3600A includes: an optical demultiplexer that demultiplexes a signal light resulting from multiplexing at the optical transmission device 1600A; and a plurality of optical receivers that demodulate QPSK signals and QAM signals on the first to fifth channels from signal lights resulting from multiplexing.

The optical reception device 3100A includes: an optical demultiplexer 3120A that demultiplexes a signal light resulting from multiplexing at the optical multiplexer 1120A of the optical transmission device 1100A; an optical receiver 3110A that demodulates a QAM signal on the first channel "Ch1" from a signal light resulting from demultiplexing; an optical receiver 3111A that demodulates a QPSK signal on the second channel "Ch2" from a signal light resulting from demultiplexing; an optical receiver 3112A that demodulates a QAM signal on the third channel "Ch3" from a signal light resulting from demultiplexing; an optical receiver 3113A that demodulates a QPSK signal on the fourth channel "Ch4" from a signal light resulting from demultiplexing; and an optical receiver 3114A that demodulates a QAM signal on the fifth channel "Ch5" from a signal light resulting from demultiplexing. Note that the number of optical receivers included in the optical reception device 3100A may be any number equal to the number of optical transmitters included in the optical transmission device 1100A.

The optical reception device 3300A and the optical reception device 3500A have configurations similar to that of the optical reception device 3100A. The optical reception device 3300A includes: an optical demultiplexer that demultiplexes a signal light resulting from multiplexing at the optical transmission device 1300A; and a plurality of optical receivers that demodulate QPSK signals and QAM signals on the first to fifth channels from signal lights resulting from multiplexing. The optical reception device 3500A includes: an optical demultiplexer that demultiplexes a signal light resulting from multiplexing at the optical transmission device 1500A; and a plurality of optical receivers that demodulate QPSK signals and QAM signals on the first to fifth channels from signal lights resulting from multiplexing.

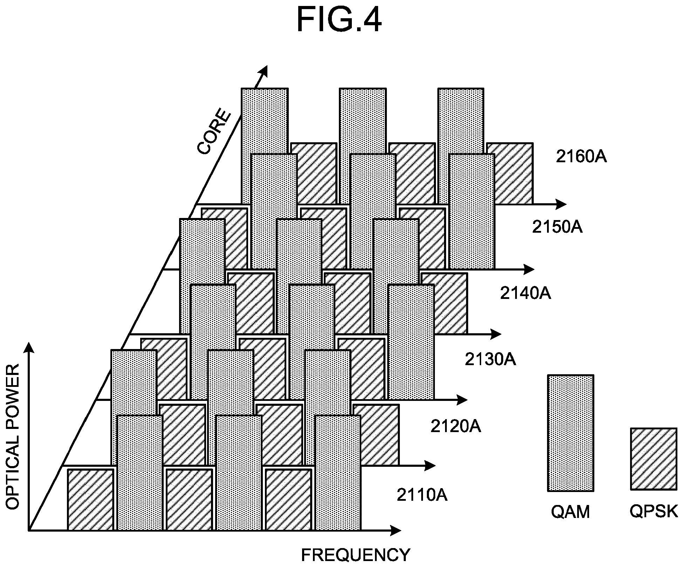

Next, operation of the optical transmission system 100A according to the second embodiment will be described. FIG. 4 is a graph illustrating an example of a spectrum of signal lights transmitted to a plurality of cores in the multicore optical fiber included in the optical transmission system according to the second embodiment. The vertical axis of FIG. 4 represents the optical power of a signal transmitted to each of a plurality of cores. The horizontal axis of FIG. 4 represents the frequency of the signal transmitted to each of the cores. FIG. 4 illustrates the optical powers and the frequencies of QAM signals and QPSK signals transmitted to the first to sixth cores 2110A, 2120A, 2130A, 2140A, 2150A, and 2160A.

The intervals in the circumferential direction of a plurality of cores arranged in the circumferential direction of the multicore optical fiber 2001A are such that a first circumferential distance between the first core 2110A and the second core 2120A adjacent to each other in the circumferential direction and a second circumferential distance between the second core 2120A and the third core 2130A adjacent to each other in the circumferential direction are equal to each other as illustrated in FIG. 3. In addition, the first circumferential distance is shorter than a third circumferential distance that is a distance between two cores that are not adjacent to each other among the cores arranged in the circumferential direction. In a similar manner, the second circumferential distance is shorter than the third circumferential distance.

Thus, it can be seen in the multicore optical fiber 2001A illustrated in FIG. 3, a circumferential distance between two cores adjacent to each other in the circumferential direction among the cores arranged in the circumferential direction is shorter than that between two cores that are not adjacent to each other among the cores arranged in the circumferential direction. In the second embodiment, modulated signals of different types with the same wavelength are output at different optical powers from each other to two cores adjacent to each other in the circumferential direction, that is, at the closet distance to each other and transmitted. Specifically, modulated signals of different types with the same wavelength are transmitted at different optical powers from each other through the second core 2120A and the third core 2130A adjacent to each other in the circumferential direction. In addition, modulated signals of different types with the same wavelength are transmitted at different optical powers from each other through the second core 2120A and the first core 2110A adjacent to each other in the circumferential direction.

The number of signal points of a QAM signal is 8, 16, 32, 64, etc. depending on the multivalue level, and a QAM signal requires a higher OSNR for satisfying necessary performance and has a smaller resistance to crosstalk than a QPSK signal. Thus, a QAM signal needs to be transmitted at a higher optical power than a QPSK signal.

In the second embodiment, the type of signal lights of QAM signals on the same wavelength between adjacent cores and of signal lights adjacent to each other in one core are made to be QPSK signals, which relatively reduces the optical powers of adjacent signals. This suppresses degradation due to crosstalk and enables transmission with good transmission characteristics.

The configurations presented in the embodiments above are examples of the present invention, which can be combined with other known technologies or can be partly omitted or modified without departing from the scope of the present invention.

### Reference Signs List

100, 100A optical transmission system; 1000, 1100, 1100A, 1200A, 1300A, 1400A, 1500A, 1600A optical transmission device; 1010, 1013, 1111, 1114 first optical transmitter; 1011, 1014, 1112 second optical transmitter; 1012, 1110, 1113 third optical transmitter; 1020, 1120, 1120A, 1220A optical multiplexer; 1110A, 1111A, 1112A, 1113A, 1114A, 1210A, 1211A, 1212A, 1213A, 1214A optical transmitter; 2000, 2000A optical transmission unit; 2001, 2001A multicore optical fiber; 2100, 2110A first core; 2100A seventh core; 2120A, 2200 second core; 2130A third core; 2140A fourth core; 2150A fifth core; 2160A sixth core; 2300, 2300A cladding; 3000, 3100, 3100A, 3200A, 3300A, 3400A, 3500A, 3600A optical reception device; 3010, 3013, 3111, 3114 first optical receiver; 3011, 3014, 3112 second optical receiver; 3012, 3110, 3113 third optical receiver; 3020, 3120, 3120A, 3220A optical demultiplexer; 3110A, 3111A, 3112A, 3113A, 3114A, 3210A, 3211A, 3212A, 3213A, 3214A optical receiver.

## Claims

1. An optical transmission system (100, 100A) comprising:
a multicore optical fiber (2001, 2001A) including a plurality of cores (2100, 2200, 2110A, 2120A, 2130A, 2140A, 2150A, 2160A); and
a plurality of optical transmission devices (1000, 1100, 1100A, 1200A, 1300A, 1400A, 1500A, 1600A) configured to output modulated signals of different types with a same wavelength and a same propagation direction at different optical powers from each other to respectively two adjacent cores at closest distance from each other among the cores.

2. The optical transmission system (100, 100A) according to claim 1, wherein the optical transmission devices are further configured to output wavelength-multiplexed signals including the modulated signals of different types to the two adjacent cores at closest distance from each other.

3. The optical transmission system (100, 100A) according to claim 2, wherein the optical transmission devices are further configured to output the modulated signals of different types at the different optical powers depending on optical signal to noise ratios.

4. The optical transmission system (100, 100A) according to claim 2, wherein the optical transmission devices are further configured to make a margin of transmission characteristics of the modulated signals of different types constant.

5. The optical transmission system (100, 100A) according to claim 2, wherein the optical transmission devices are further configured to output the wavelength-multiplexed signals by alternately arranging the modulated signals of different types in time series.

## Patentansprüche

1. Optisches Übertragungssystem (100, 100A), aufweisend:
eine optische Mehrkernfaser (2001, 2001A) mit einer Vielzahl von Kernen (2100, 2200, 2110A, 2120A, 2130A, 2140A, 2150A, 2160A); und
eine Vielzahl von optischen Übertragungsgeräten (1000, 1100, 1100A, 1200A, 1300A, 1400A, 1500A, 1600A), die dazu ausgebildet sind, verschiedene Arten von modulierten Signalen mit derselben Wellenlänge und derselben Ausbreitungsrichtung bei jeweils unterschiedlicher optischer Leistung an jeweils zwei benachbarte Kerne auszugeben, die unter den Kernen den geringsten Abstand voneinander haben.

2. Optisches Übertragungssystem (100, 100A) nach Anspruch 1, wobei die optischen Übertragungsgeräte ferner dazu ausgebildet sind, Wellenlängenmultiplexsignale, die die verschiedenen Arten von modulierten Signalen enthalten, an die zwei benachbarten Kerne auszugeben, die den geringsten Abstand voneinander haben.

3. Optisches Übertragungssystem (100, 100A) nach Anspruch 2, wobei die optischen Übertragungsgeräte ferner dazu ausgebildet sind, die verschiedenen Arten von modulierten Signalen bei jeweils unterschiedlicher optischer Leistung in Abhängigkeit von optischen Signal-Rauschverhältnissen auszugeben.

4. Optisches Übertragungssystem (100, 100A) nach Anspruch 2, wobei die optischen Übertragungsgeräte ferner dazu ausgebildet sind, eine Marge von Übertragungscharakteristiken der verschiedenen Arten von modulierten Signalen konstant zu machen.

5. Optisches Übertragungssystem (100, 100A) nach Anspruch 2, wobei die optischen Übertragungsgeräte ferner dazu ausgebildet sind, die Wellenlängenmultiplexsignale auszugeben, indem die verschiedenen Arten von modulierten Signalen abwechselnd zeitlich nacheinander angeordnet werden.

## Revendications

1. Système de transmission optique (100, 100A) comprenant :
une fibre optique à âmes multiples (2001, 2001A) incluant une pluralité d'âmes (2100, 2200, 2110A, 2120A, 2130A, 2140A, 2150A, 2160A) ; et
une pluralité de dispositifs de transmission optique (1000, 1100, 1100A, 1200A, 1300A, 1400A, 1500A, 1600A) configurés pour délivrer des signaux modulés de types différents avec une même longueur d'onde et une même direction de propagation à des puissances optiques différentes l'une de l'autre respectivement à deux âmes adjacentes à une distance la plus courte entre elles parmi les âmes.

2. Système de transmission optique (100, 100A) selon la revendication 1, dans lequel les dispositifs de transmission optique sont en outre configurés pour délivrer des signaux multiplexés en longueur d'onde incluant les signaux modulés de types différents aux deux âmes adjacentes à une distance la plus courte entre elles.

3. Système de transmission optique (100, 100A) selon la revendication 2, dans lequel les dispositifs de transmission optique sont en outre configurés pour délivrer les signaux modulés de types différents aux puissances optiques différentes en fonction de rapports de signal optique sur bruit.

4. Système de transmission optique (100, 100A) selon la revendication 2, dans lequel les dispositifs de transmission optique sont en outre configurés pour rendre une marge de caractéristiques de transmission des signaux modulés de types différents constante.

5. Système de transmission optique (100, 100A) selon la revendication 2, dans lequel les dispositifs de transmission optique sont en outre configurés pour délivrer les signaux multiplexés en longueur d'onde en agençant en alternance les signaux modulés de types différents en séries chronologiques.
